# DEMANDE DE BREVET EUROPEEN

(11) **EP 2 903 091 A1**
(43) Date de publication de la demande: **05.08.2015**
(21) Numéro de dépôt: 15152373.5
(22) Date de dépôt: 23.01.2015
(51) Int. Cl.: H01R 11/28, H01M 2/30, H01M 10/60, H01R 101/00

(54) **Système pour connecter électriquement au moins un premier équipement et un deuxième équipement entre eux**

(30) Priorité: 29.01.2014 FR 1450688
(71) Demandeur: Hypertac S.A., 76410 Saint-Aubin-les-Elbeuf (FR)
(72) Inventeur: Martin, Yvan, 76500 ELBEUF (FR); Ilie, Razvan, 78150 ROCQUENCOURT (FR)
(74) Mandataire: Blot, Philippe Robert Emile

(57) **Abrégé**

Système (15) pour connecter électriquement deux batteries (5, 10), chacunes comprenant un premier (26, 26A) et un deuxième connecteur (28, 28A) selon une même direction de connexion (D), comprenant :
- au moins un organe de connexion (50) reliant par un pont (70) un premier (52) et un deuxième connecteur (54) respectivement adaptés pour recevoir le premier (26A) et le deuxième connecteur (28) des batteries selon la direction de connexion, et
- une coque (56) électriquement isolante définissant une chambre (100) recevant l'organe de connexion et comportant une première (120) et une deuxième partie (122) situées de part et d'autre du pont selon la direction de connexion, la chambre et le pont étant configurés pour permettre une circulation ascendante (F1) et descendante (F3) d'air entre la première vers la deuxième partie afin de refroidir le pont.

## Description

La présente invention concerne un système pour connecter électriquement au moins un premier équipement électrique et un deuxième équipement électrique entre eux.

L'invention concerne aussi un ensemble comportant des équipements électriques et un tel système. Un tel ensemble est par exemple mis en oeuvre dans un véhicule électrique ou hybride.

Le premier équipement électrique et le deuxième équipement électrique sont par exemple des batteries adaptées pour fournir un courant électrique, par exemple à un véhicule automobile électrique.

La première batterie et la deuxième batterie sont en général connectées l'une à l'autre en série. Pour ce faire, il est connu de mettre en oeuvre un gros contact par exemple entre une borne positive de la deuxième batterie et une borne négative de la première batterie. Le volume du contact, donc son caractère conducteur, permet de minimiser la résistance électrique de contact entre la borne positive et la borne négative. Ainsi, le dégagement de chaleur par effet Joule au niveau du contact est minimisé de manière à éviter un échauffement trop important du contact, ce qui est d'autant plus important que le contact est en général confiné dans une gaine isolante électriquement pour des questions de sécurité ou une enveloppe de protection isolante.

De tels contacts donnent satisfaction, mais ils sont encombrants et éventuellement difficiles à installer ou à utiliser.

Un but de l'invention est donc de fournir un système pour connecter électriquement au moins un premier équipement et un deuxième équipement entre eux, et qui soit facile à utiliser et peu encombrant, tout en n'occasionnant pas d'échauffement trop important au niveau du contact.

A cet effet l'invention a pour objet un système pour connecter électriquement au moins un premier équipement électrique et un deuxième équipement électrique entre eux, chacun du premier équipement électrique et du deuxième équipement électrique comportant au moins un premier connecteur et un deuxième connecteur, lesdits connecteurs étant des connecteurs mâles ou femelles s'étendant selon une même direction de connexion commune au premier équipement électrique et au deuxième équipement électrique, la direction de connexion étant destinée à être sensiblement verticale, le système comprenant :
- au moins un organe de connexion comportant un premier connecteur femelle ou mâle et un deuxième connecteur femelle ou mâle respectivement adaptés pour recevoir le premier connecteur mâle ou femelle du deuxième équipement électrique et le deuxième connecteur mâle ou femelle du premier équipement électrique selon la direction de connexion, l'organe de connexion comportant un pont reliant électriquement le premier connecteur femelle ou mâle et le deuxième connecteur femelle ou mâle, le pont étant propre à chauffer pendant une utilisation du système, et
- une coque électriquement isolante définissant une chambre recevant l'organe de connexion, la chambre comportant une première partie et une deuxième partie situées de part et d'autre du pont selon la direction de connexion, la chambre et le pont étant configurés pour permettre une circulation ascendante d'air de la première partie vers la deuxième partie, la circulation ascendante d'air se faisant au contact du pont, et pour permettre une circulation descendante d'air de la deuxième partie vers la première partie.

Selon des modes particuliers de réalisation, le système comprend l'une ou plusieurs des caractéristiques suivantes, prises isolément ou selon toutes les combinaisons techniquement possibles :
- la direction de connexion est destinée à former avec la verticale un angle de moins de 45 degrés durant l'utilisation, de préférence inférieur à 5° ;
- le pont définit au moins un conduit adapté pour permettre une circulation descendante d'air dans le conduit de la deuxième partie de la chambre vers la première partie ;
- le premier connecteur et le deuxième connecteur sont des connecteurs femelles, le premier connecteur du deuxième équipement électrique et le deuxième connecteur du premier équipement électrique sont des connecteurs mâles, et le premier connecteur et le deuxième connecteur comprennent un corps de forme générale cylindrique et d'axe sensiblement parallèle à la direction de connexion pour recevoir respectivement le premier connecteur du deuxième équipement électrique et le deuxième connecteur du premier équipement électrique ;
- le premier connecteur et le deuxième connecteur sont adaptés pour permettre une circulation d'air dans le corps sensiblement selon la direction de connexion, le premier connecteur et le deuxième connecteur comprenant de préférence au moins un fil métallique enroulé autour de la direction de connexion et destiné à s'interposer entre le corps et respectivement le premier connecteur du deuxième équipement électrique et le deuxième connecteur du premier équipement électrique ;
- le premier connecteur et le deuxième connecteur comprennent une pluralité d'ailettes faisant saillie à partir du corps ;
- les ailettes sont en contact avec une paroi de la chambre ;
- les ailettes présentent une forme allongée selon la direction de connexion ;
- la chambre comporte une troisième partie et une quatrième partie situées de part et d'autre du premier connecteur selon la direction de connexion, la chambre, le premier connecteur et le pont étant configurés pour permettre une circulation ascendante d'air de la première partie vers la quatrième partie via la troisième partie, la circulation ascendante d'air se faisant au contact du premier connecteur, et pour permettre une circulation descendante d'air de la quatrième partie vers la première partie ;
- le pont définit au moins un conduit adapté pour permettre une circulation descendante d'air dans le conduit, de la quatrième partie de la chambre vers la première partie ; et
- le système comprend un troisième connecteur femelle ou mâle et un quatrième connecteur femelle ou mâle respectivement adaptés pour recevoir le deuxième connecteur du deuxième équipement électrique et le premier connecteur du premier équipement électrique selon la direction de connexion, et deux coques d'isolation adaptées pour isoler électriquement respectivement le troisième connecteur et le quatrième connecteur, les deux coques d'isolation étant respectivement reçues dans un premier logement et un deuxième logement définis par la coque dans une position montée du troisième connecteur et du quatrième connecteur.

L'invention concerne également un ensemble comprenant :
- au moins un premier équipement électrique et un deuxième équipement électrique, chacun du premier équipement électrique et du deuxième équipement électrique comportant au moins un premier connecteur et un deuxième connecteur, lesdits connecteurs étant des connecteurs mâles ou femelles s'étendant selon une même direction de connexion commune au premier équipement électrique et au deuxième équipement électrique, et
- un système tel que défini ci-dessus, le système connectant électriquement le premier équipement électrique et le deuxième équipement électrique entre eux, le premier connecteur femelle ou mâle et le deuxième connecteur femelle ou mâle recevant respectivement le premier connecteur mâle ou femelle du deuxième équipement électrique et le deuxième connecteur mâle ou femelle du premier équipement électrique selon la direction de connexion.

L'invention sera mieux comprise à la lecture de la description qui va suivre, donnée uniquement à titre d'exemple et faite en se référant aux dessins annexés sur lesquels :
- la figure 1 est une vue en perspective représentant schématiquement un ensemble selon l'invention,
- la figure 2 est une vue éclatée représentant des connecteurs d'un premier équipement électrique et d'un deuxième équipement électrique de l'ensemble représenté sur la figure 1, et le système représenté sur la figure 1 et qui connecte électriquement le premier équipement électrique et le deuxième équipement électrique entre eux,

- la figure 3 est une vue en perspective, partiellement arrachée, du système représenté sur les figures 1 et 2, le système étant à l'état monté,
- la figure 4 est une vue en perspective d'un organe de connexion du système représenté sur les figures 1 à 3,
- la figure 5 est une vue de face du système représenté sur les figures 1 à 3, et des connecteurs du premier équipement électrique et du deuxième équipement électrique, les connecteurs étant reçus dans le système,
- les figures 6 et 7 sont des coupes du dispositif représenté sur la figure 5, respectivement selon deux plans sensiblement perpendiculaires à la direction de connexion, et
- la figure 8 est une vue en perspective, partiellement arrachée, d'une variante du système représenté sur les figures 1 à 3, la variante étant à l'état monté.

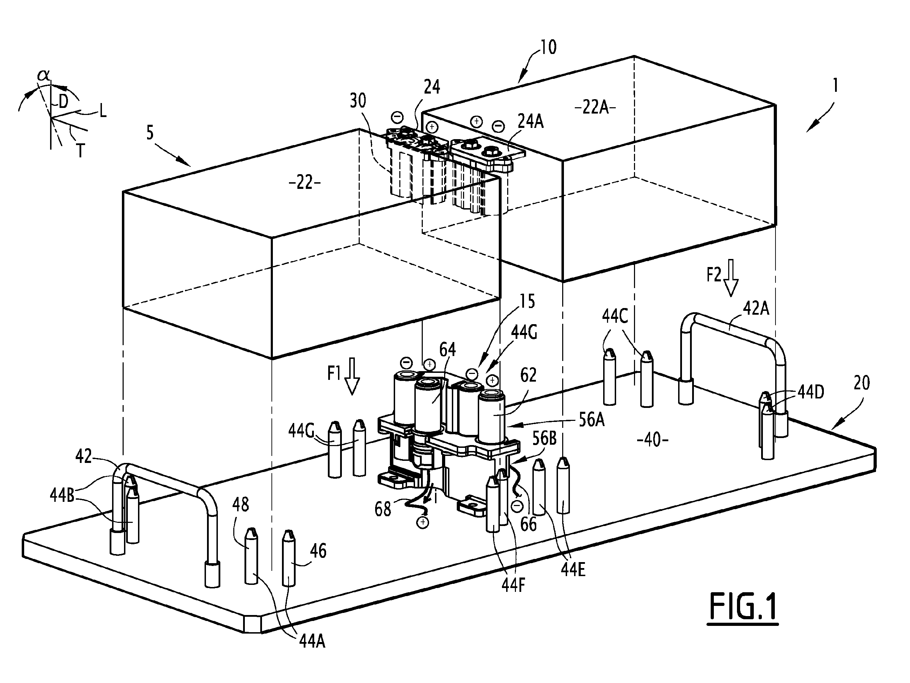

En référence à la figure 1, on décrit un ensemble 1 selon l'invention. L'ensemble 1 est par exemple destiné à prendre place dans un véhicule automobile électrique ou hybride (non représenté). L'ensemble 1 est adapté pour fournir une alimentation électrique au véhicule automobile. L'ensemble 1 est avantageusement amovible.

L'ensemble 1 comprend un premier équipement électrique qui par exemple une première batterie 5, un deuxième équipement électrique qui est par exemple une deuxième batterie 10, un système 15 pour connecter électriquement le premier équipement électrique et le deuxième équipement électrique entre eux, et un support 20 adapté pour recevoir le système 15, ainsi que la première batterie 5 et la deuxième batterie 10.

Selon des variantes non représentées, le premier équipement électrique et le deuxième équipement électrique sont d'autres équipements que des batteries.

Selon d'autres variantes non représentées, le premier équipement électrique et le deuxième équipement électrique sont de nature différente l'un de l'autre.

Dans l'exemple représenté, la première batterie 5 et la deuxième batterie 10 sont avantageusement sensiblement analogues, aussi seule la première batterie sera décrite en détail.

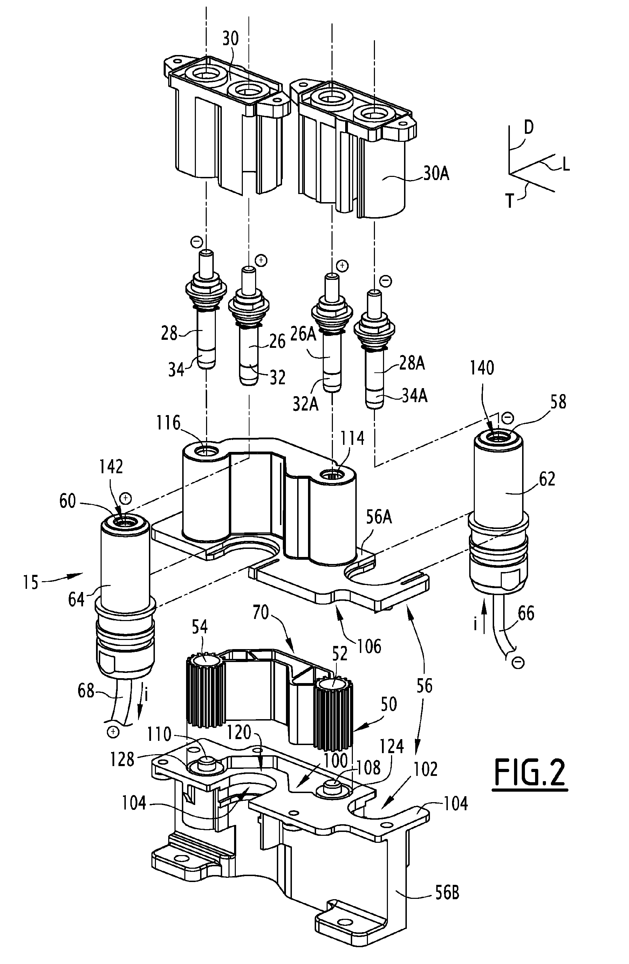

La première batterie 5 présente une forme générale parallélépipédique. La première batterie 5 comprend un corps 22 contenant des organes internes (non représentés) destinés à la production d'électricité, une platine de connexion 24 faisant saillie à partir du corps 22, un premier connecteur 26 mâle (figure 2) formant par exemple une borne positive de la première batterie, et un deuxième connecteur 28 mâle formant par exemple une borne négative. La première batterie 5 comprend aussi une coque de protection 30 adaptée pour protéger le premier connecteur et le deuxième connecteur d'éventuels contacts intempestifs, notamment avec une personne (non représentée) manipulant la première batterie 5.

Le premier connecteur 26 s'étend sensiblement selon une direction de connexion D. Le premier connecteur 26 est solidaire de la platine 24 et connecté électriquement aux organes internes de la première batterie 5. Le premier connecteur 26 comprend une partie extrémale 32 sensiblement cylindrique destinée à pénétrer dans le système 15.

Le deuxième connecteur 28 est analogue au premier connecteur 26 et ne sera pas décrit en détail.

La coque de protection 30 est fixée sur la platine 24. La coque de protection 30 est réalisée dans un matériau isolant, par exemple. La coque de protection 30, le premier connecteur 26, et le deuxième connecteur 28 forment ensemble une fiche adaptée pour connecter la première batterie 5 au système 15 selon la direction de connexion D.

La deuxième batterie 10 comprend des éléments similaires à ceux de la première batterie 5. Les éléments similaires portent les mêmes références suivies de la lettre A. La deuxième batterie 10 comprend notamment un corps 22A, une languette 24A, un premier connecteur 26A mâle formant une borne positive, un deuxième connecteur 28A mâle formant une borne négative, et une coque de protection 30A.

La direction de connexion D est destinée à former avec la verticale un angle α (figure 1) de moins de 45° durant l'utilisation de l'ensemble 1, de préférence inférieur à 5°.

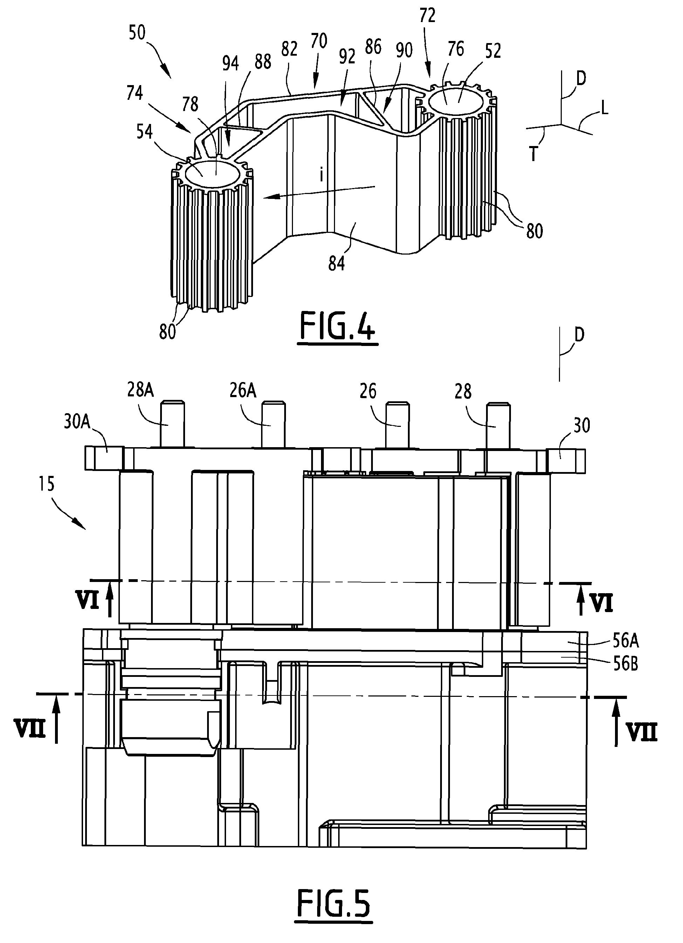

La première batterie 5 et la deuxième batterie 10 sont mobiles entre une position déconnectée (représentée sur la figure 1) dans laquelle elles sont situées à l'écart du système 15, et une position connectée dans laquelle les premiers connecteurs 26, 26A et les deuxièmes connecteurs 28, 28A sont reçus dans le système 15 comme représenté sur la figure 5. La position connectée se déduit de la position déconnectée par une translation de la première batterie 5 et de la deuxième batterie 10 selon la direction de connexion D suivant les flèches F1 et F2 visibles sur la figure 1.

Le support 20 (figure 1) comprend une plaque 40, deux anses 42, 42A, et des systèmes de calage 44A, 44B, 44C, 44D, 44E, 44F, 44G adaptés pour caler et centrer la première batterie 5 et la deuxième batterie 10 lorsque ces dernières sont reçues sur le support 20.

La plaque 40 est par exemple de forme générale rectangulaire et adaptée aux dimensions de la première batterie 5 et de la deuxième batterie 10. La plaque 40 est par exemple sensiblement perpendiculaire à la direction de connexion D.

Les anses 42, 42A sont avantageusement situées sur deux extrémités de la plaque 40 selon une direction longitudinale L sensiblement perpendiculaire à la direction de connexion D. Les anses 42, 42A font saillie à partir de la plaque 40 du côté de la première batterie 5 et de la deuxième batterie 10 lorsque celles-ci sont reçues sur le support 20 dans leur position connectée. Les anses 42, 42A sont adaptés à la préhension par un utilisateur (non représenté) pour manipuler l'ensemble 1.

Chaque système de calage 44A à 44G est propre à interagir avec un coin de l'une ou l'autre de la première batterie 5 et de la deuxième batterie 10, de manière à limiter les déplacements de ces batteries selon toutes les directions perpendiculaires à la direction de connexion D.

Chacun des systèmes de calage 44A à 44G est par exemple formé de deux crayons 46, 48 fixés sur la plaque 40.

Les crayons 46, 48 sont avantageusement sensiblement parallèles à la direction de connexion D.

Le système 15 est avantageusement fixé sur le support 20, à un emplacement adapté pour que le système 15 se situe entre la première batterie 5 et la deuxième batterie 10 lorsque celles-ci sont reçues sur le support 20 dans la position connectée. Par exemple, le système 15 est fixé sur la plaque 40 sensiblement au milieu de cette dernière selon la direction longitudinale L.

Selon une variante non représentée, le système 15 est fixé sur le premier équipement électrique ou sur le deuxième équipement électrique au lieu d'être fixé sur le support 20, ou le système 15 est solidaire du premier équipement électrique ou du deuxième équipement électrique au lieu d'être solidaire du support 20.

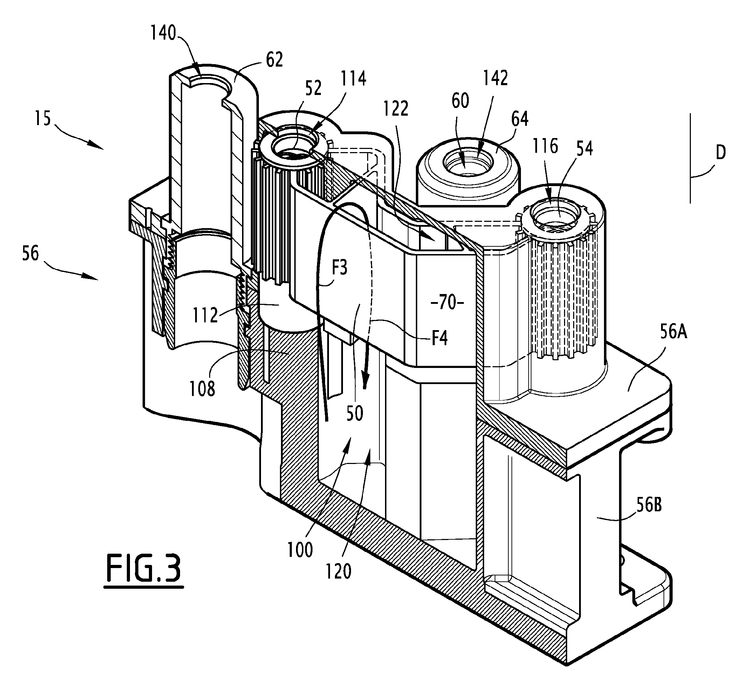

Comme visible sur les figures 2 et 3, le système 15 comprend un organe de connexion 50 comportant un premier connecteur 52 femelle et un deuxième connecteur 54 femelle respectivement adaptés pour recevoir le premier connecteur 26A de la deuxième batterie 10 et le deuxième connecteur 28 de la première batterie 5, et une coque 56 électriquement isolante et avantageusement formée de deux parties 56A et 56B. Le système 15 comprend aussi un troisième connecteur 58 femelle et un quatrième connecteur 60 femelle respectivement adaptés pour recevoir le deuxième connecteur 28A de la deuxième batterie 10 et le premier connecteur 26 de la première batterie 5, et deux coques d'isolation 62, 64 adaptées pour isoler électriquement respectivement le troisième connecteur 58 et le quatrième connecteur 60. Le système 15 comprend enfin deux câbles électriques 66, 68 respectivement reliés électriquement au troisième connecteur 58 et au quatrième connecteur 60.

Selon des variantes non représentées :
- le premier connecteur 26A est un connecteur femelle et le premier connecteur 52 est un connecteur mâle, et/ou
- le deuxième connecteur 28A est un connecteur femelle et le troisième connecteur 58 est un connecteur mâle, et/ou
- le premier connecteur 26 est un connecteur femelle et le quatrième connecteur 60 est un connecteur mâle, et/ou
- le deuxième connecteur 28 est un connecteur femelle et le deuxième connecteur 54 est un connecteur mâle.

Par « électriquement isolante », on entend « utilisant un matériau isolant ».

Comme visible sur la figure 4, l'organe de connexion 50 est par exemple métallique. L'organe de connexion 50 comprend avantageusement un alliage métallique conducteur, par exemple léger. L'organe de connexion 50 est avantageusement monobloc, c'est-à-dire constitué d'une seule pièce.

L'organe de connexion 50 comprend un pont 70 reliant électriquement le premier connecteur 52 et le deuxième connecteur 54.

Le premier connecteur 52 et le deuxième connecteur 54 sont avantageusement sensiblement identiques du point de vue structurel. Le premier connecteur 52 et le deuxième connecteur 54 sont situés sensiblement sur deux extrémités 72, 74 du pont 70 opposées l'une à l'autre selon une direction transversale T sensiblement perpendiculaire à la direction de connexion D et avantageusement sensiblement perpendiculaire à la direction longitudinale L.

Chacun du premier connecteur 52 et du deuxième connecteur 54 comprend un corps de forme générale cylindrique d'axe sensiblement parallèle à la direction de connexion D. Le corps définit un logement intérieur 76, 78 adapté pour recevoir respectivement le premier connecteur 26A de la deuxième batterie 10 et le deuxième connecteur 28 de la première batterie 5. Chacun du premier connecteur 52 et du deuxième connecteur 54 comprend avantageusement des ailettes 80 s'étendant radialement vers l'extérieur de chacun du premier connecteur 52 et du deuxième connecteur 54 à partir du corps.

Le premier connecteur 52 et le deuxième connecteur 54 sont avantageusement adaptés pour permettre une circulation d'air dans les logements intérieurs 76, 78 selon la direction de connexion D.

Le premier connecteur 52 et le deuxième connecteur 54 comprennent de préférence au moins un fil métallique 79 enroulé autour de la direction de connexion D et destiné à s'interposer entre le corps et respectivement le premier connecteur 26A de la deuxième batterie 10 et le deuxième connecteur 28 de la première batterie 5.

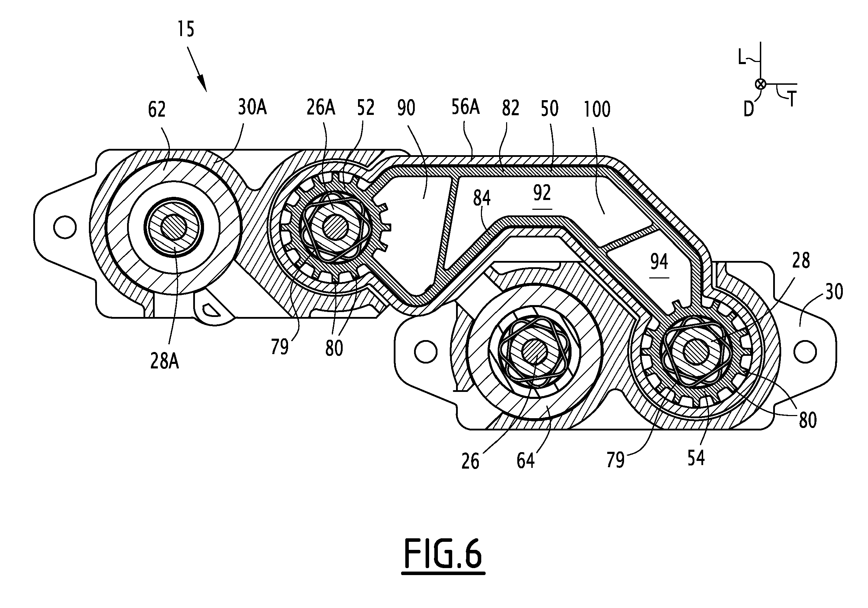

Le fil métallique 79 présente par exemple un profil sensiblement polygonal en vue selon la direction de connexion D (figure 6).

En variante (non représentée), le fil métallique 79 définit une nappe présentant par exemple une forme générale d'hyperboloïde, selon une modalité connue en elle-même par l'homme du métier des connecteurs.

Les ailettes 80 s'étendent par exemple sensiblement parallèlement à la direction de connexion D. Les ailettes 80 sont avantageusement réparties angulairement de manière régulière sur le pourtour de chacun du premier connecteur 52 et du deuxième connecteur 54.

Le pont 70 comprend par exemple deux parois latérales 82, 84 reliant le premier connecteur 52 et le deuxième connecteur 54, et par exemple au moins deux nervures internes 86, 88 reliant entre elles les parois latérales 82, 84 et définissant trois conduits 90, 92, 94.

Les parois latérales 82, 84 et les nervures 86, 88 sont avantageusement sensiblement parallèles à la direction de connexion D.

Les conduits 90, 92, 94 sont ouverts des deux côtés selon la direction de connexion D de manière à permettre une circulation d'air selon la direction de connexion D.

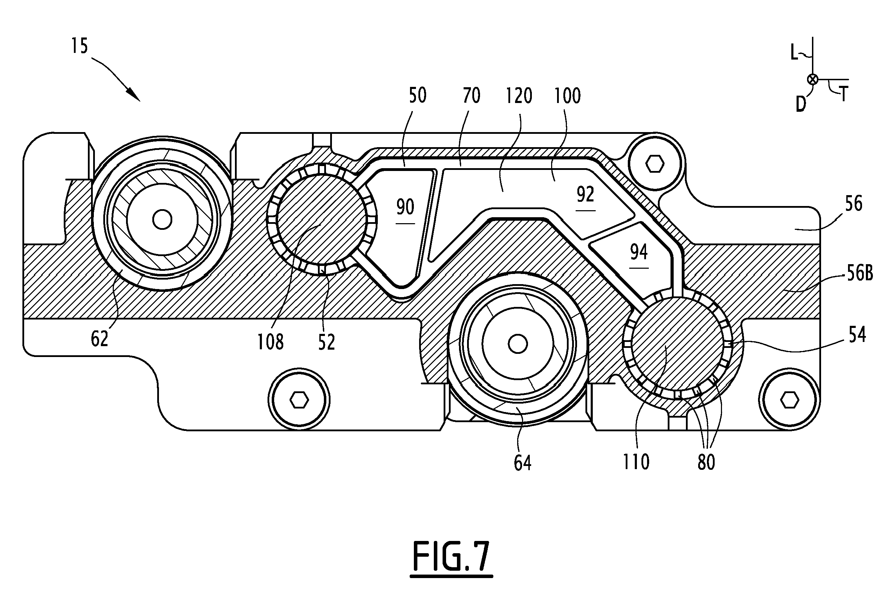

La coque 56 du système 15 est par exemple réalisée en matériau isolant. La coque 56 comprend avantageusement deux demi-coques 56A et 56B (figures 2, 3, 6, et 7). La coque 56 définit une chambre 100 adaptée pour recevoir l'organe de connexion 50.

Comme visible sur la figure 1, la demi-coque 56B est fixée sur le support 20. La demi-coque 56B définit deux logements 102, 104 (figure 2) adaptés pour recevoir les deux coques d'isolation 62 et 64 du troisième connecteur 58 et du quatrième connecteur 60. La demi-coque 56B comporte une surface 104 avantageusement sensiblement plane et sensiblement perpendiculaire à la direction de connexion D, adaptée pour coopérer par contact avec une surface 106 de la demi-coque 56A.

Les logements 102, 104 sont par exemple adaptés pour recevoir les coques d'isolation 62, 64 par translation de ces dernières selon la direction longitudinale L.

La demi-coque 56B définit deux plots 108, 110 sur lesquels repose l'organe de connexion 50. Par exemple, le plot 108 reçoit le premier connecteur 52 et le plot 110 reçoit le deuxième connecteur 54.

Chacun des plots 108, 110 est avantageusement de forme générale sensiblement cylindrique d'axe parallèle à la direction de connexion D. Avantageusement, chacun des plots 108, 110 est prolongé par une cale 112 (figure 3) permettant de placer l'organe de connexion 50 à une certaine hauteur selon la direction de connexion D à l'intérieur de la demi-coque 56A.

La demi-coque 56A est adaptée pour être fixée sur la demi-coque 56B. La demi-coque 56A reçoit l'organe de connexion 50 dont elle épouse sensiblement la forme. La demi-coque 56A définit deux ouvertures 114, 116 permettant le passage du premier connecteur 26A et du deuxième connecteur 28 respectivement vers le premier connecteur 52 et le deuxième connecteur 54 selon la direction de connexion D.

La demi-coque 56B forme une base de la coque 56.

La demi-coque 56A forme un capot de la coque 56.

La coque 56 est adaptée pour être coiffée par les coques d'isolation 30, 30A dans la position connectée de la première batterie 5 et de la deuxième batterie 10.

La chambre 100 (figure 3) comprend une première partie 120 et une deuxième partie 122 situées de part et d'autre du pont 70 selon la direction de connexion D. La chambre 100 et le pont 70 sont configurés pour permettre une circulation ascendante d'air (représentée par une flèche F3 sur la figure 3) de la première partie 120 vers la deuxième partie 122, et pour permettre une circulation descendante d'air (représentée par une flèche F4 sur la figure 3) de la deuxième partie 122 vers la première partie 120.

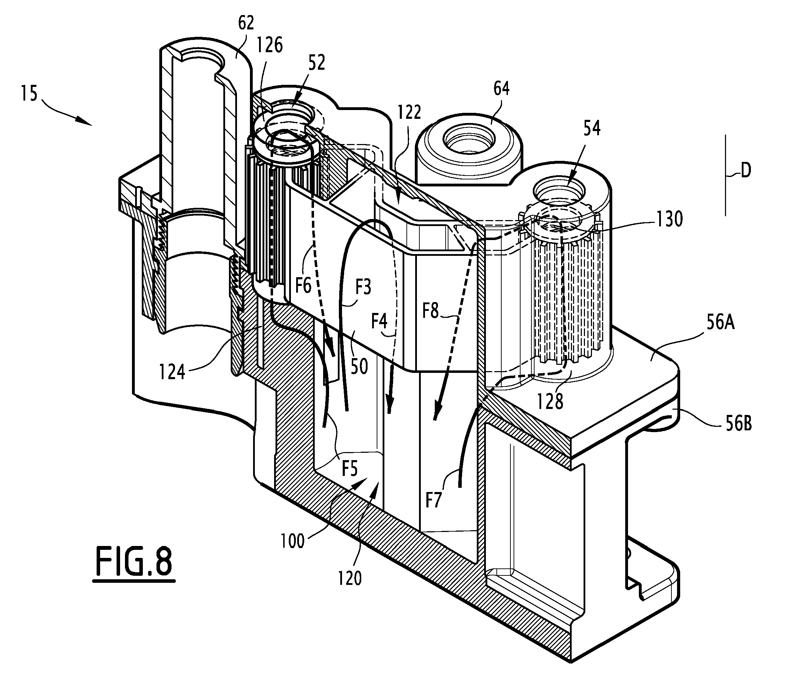

Selon une variante représentée sur la figure 8, la chambre 100 comprend également une troisième partie 124 et une quatrième partie 126 situées de part et d'autre du premier connecteur 52 selon la direction de connexion D, et une cinquième partie 128 et une sixième partie 130 situées de part et d'autre du deuxième connecteur 54 selon la direction de connexion D.

Dans cette variante, la chambre 100, le premier connecteur 52 et le pont 70 sont configurés pour permettre une circulation ascendante d'air (représentée par une flèche F5 sur la figure 8) de la première partie 120 vers la quatrième partie 130 via la troisième partie 128, et pour permettre une circulation descendante d'air (représentée par une flèche F6 sur la figure 8) de la quatrième partie 130 vers la première partie 120. De même, la chambre 100, le deuxième connecteur 54 et le pont 70 sont configurés pour permettre une circulation ascendante d'air (représentée par une flèche F7 sur la figure 8) de la première partie 120 vers la sixième partie 130 via la cinquième partie 128, et pour permettre une circulation descendante d'air (représentée par une flèche F8 sur la figure 8) de la sixième partie 130 vers la première partie 120.

En référence à la figure 3, la circulation ascendante d'air F3 se fait au contact du pont 70.

La circulation descendante d'air F4 se fait avantageusement via le conduit 92 du pont 70.

Dans la variante représentée sur la figure 8, les circulations descendantes d'air selon les flèches F6 et F8 se font avantageusement via les conduits 90, 94 du pont 70.

La première partie 120 de la chambre 100 se situe en dessous du pont 70, c'est-à-dire du côté du support 20 par rapport au pont 70 selon la direction de connexion D.

Dans la variante représentée sur la figure 8, la première chambre 120 communique avec la troisième chambre 124 et avec la cinquième chambre 128.

La troisième chambre 124 et la cinquième chambre 128 présentent par exemple une forme annulaire entourant les plots 108, 110. La troisième chambre 124 et la cinquième chambre 128 sont situées en dessous du premier connecteur 52 et du deuxième connecteur 54, avantageusement dans le prolongement du premier connecteur 52 et du deuxième connecteur 54 selon la direction de connexion D.

La quatrième chambre 126 et la sixième chambre 130 se situent respectivement au-dessus du premier connecteur 52 et du premier connecteur 54. La quatrième chambre 126 et la sixième chambre 130 communiquent avec la deuxième chambre 122.

En variante (non représentée), les parois de la chambre 100 définissent des ailettes s'étendant dans l'une ou plusieurs des parties 120, 122, 124, 126, 128, 130 de la chambre.

Le troisième connecteur 58 et le quatrième connecteur 60 présentent une forme générale cylindrique d'axe parallèle à la direction de connexion D.

Les coques d'isolation 62, 64 présentent une forme générale cylindrique épousant sensiblement le troisième connecteur 58 et le quatrième connecteur 60 respectivement. Les coques d'isolation 62, 64 définissent respectivement des ouvertures 140, 142 adaptées pour laisser passer le deuxième connecteur 28A de la deuxième batterie 10 et le premier connecteur 26 de la première batterie 5.

Lorsque le troisième connecteur 58 est reçu dans le logement 102 formé par la coque 56, le troisième connecteur 58 et le premier connecteur 52 forment ensemble une prise femelle adaptée pour recevoir la fiche de connexion de la deuxième batterie 10.

De même, lorsque le quatrième connecteur 60 est reçu dans le logement 104 formé par la coque 56, le quatrième connecteur 60 et le deuxième connecteur 54 forment ensemble une prise femelle adaptée pour recevoir la fiche de connexion de la première batterie 5.

Le fonctionnement de l'ensemble 1 va maintenant être décrit.

Comme visible sur la figure 1, le support 20 et le système 15 forment avantageusement un bloc facile à manipuler grâce aux anses 42, 42A.

Pour connecter la première batterie 5 et la deuxième batterie 10 entre elles, la première batterie 5 et la deuxième batterie 10 sont déplacées de leur position déconnectée à leur position connectée. Pour ce faire, on les translate par exemple de la position déconnectée représentée sur la figure 1 selon la direction de connexion D dans le sens des flèches F1 et F2. Les corps 22 et 22A viennent se caler dans les systèmes de calage 44A à 44G du support 20. Les premiers connecteurs 26, 26A et les deuxièmes connecteurs 28, 28A de la première batterie 5 et de la deuxième batterie 10 viennent se placer respectivement dans le quatrième connecteur 60, le premier connecteur 52, le deuxième connecteur 54, et le troisième connecteur 58 du système 15. Les coques de protection 30, 30A viennent se placer sur la coque 56 (dans l'exemple sur la demi-coque 56A) et sur les coques d'isolation 62, 64. La première batterie 5 et la deuxième batterie 10 sont alors dans leur position connectée.

Il se forme un circuit électrique. L'énergie électrique de la première batterie 5 et de la deuxième batterie 10 est récupérée sur les câbles 66, 68.

Le câble 68 constitue une borne positive. Le câble 68 est relié électriquement au quatrième connecteur 60 du système 15. Le quatrième connecteur 60 est connecté électriquement au premier connecteur 26 de la première batterie 5. Le premier connecteur 26 constitue une borne positive reliée aux organes internes de la première batterie 5. Le deuxième connecteur 28 constitue une borne négative de la première batterie 5 et est connecté au deuxième connecteur 54 du système 15. Le deuxième connecteur 54 est relié électriquement par le pont 70 au premier connecteur 52. Le premier connecteur 52 est en contact électrique avec le premier connecteur 26A de la deuxième batterie 10. Le deuxième connecteur 26A constitue une borne positive de la deuxième batterie 10. Le premier connecteur 26A est relié aux organes internes de la deuxième batterie 10. Le deuxième connecteur 28A de la deuxième batterie 10 constitue une borne négative de la deuxième batterie 10. Le deuxième connecteur 28A est en contact électrique avec le troisième connecteur 58 du système 15. Le troisième connecteur 58 est relié électriquement au câble 66 qui constitue une borne de sortie négative.

En utilisation, un courant i sort par le câble 68. Ce même courant i entre par le câble 66. Ce même courant i traverse l'organe de connexion 50 depuis le premier connecteur 52 vers le deuxième connecteur 54. Il se produit un échauffement de l'organe de connexion 50 par effet Joule, notamment du fait des résistances de contact entre le premier connecteur 52 et le premier connecteur 26A d'une part, et entre le deuxième connecteur 28 et le deuxième connecteur 54 d'autre part, ainsi que dans toutes les parties conductrices de l'organe de connexion 50.

Grâce à la circulation d'air ascendante F3 (figure 3), de l'air froid présent dans la première partie 120 de la chambre 100 arrive au contact du pont 70 et s'échauffe tout en refroidissant le pont 70. L'air chauffé se retrouve dans la deuxième partie 122 de la chambre 100.

Grâce à la circulation d'air descendante F4, l'air chauffé redescend via le conduit 92 et retourne dans la première partie 120 où il se refroidit au contact des parois de la première partie 120. On comprend que les parois de la première partie 120 de la chambre 100 agissent comme une source froide permettant le refroidissement de l'air interne contenu dans la chambre 100. La première partie 120 constitue un réservoir d'air froid.

Le pont 70 agit comme une source chaude pour l'air contenu dans la chambre 100.

La température de l'organe de connexion 50 s'équilibre entre le pont 70 et le premier connecteur 52 d'une part et le deuxième connecteur 54 d'autre part par conduction thermique.

En outre, la chaleur qui se dégage au niveau du premier connecteur 52 et du deuxième connecteur 54 passe dans la chambre 100 via les ailettes 80 puis dans la coque 56 par conductoconvexion pour être évacuée vers l'extérieur du système 15.

Dans la variante illustrée sur la figure 8, les circulations d'air matérialisées par les flèches F5, F6, F7 et F8 permettent de transporter la chaleur dégagée au niveau du premier connecteur 52 et du deuxième connecteur 54 jusqu'à la première partie 120 de la chambre 100. L'air froid en provenance de la première partie 120 entre dans la troisième partie 124 (flèche F5) et dans la cinquième partie 128 (flèche F7) et se répartit autour des plots 108, 110. Puis l'air passe le long des ailettes 80 qui définissent des couloirs de circulation sensiblement selon la direction de connexion D. L'air chauffe au contact du premier connecteur 52 et du deuxième connecteur 54 et arrive dans la quatrième partie 126 et dans la sixième partie 130 de la chambre 100. Ensuite l'air redescend (flèches F6, F8) via les conduits 90, 94 pour regagner la première partie 120.

Grâce aux caractéristiques décrites ci-dessus, le système 15 connecte électriquement le premier équipement électrique et le deuxième équipement électrique entre eux. La connexion est simple à réaliser.

En outre, grâce à l'évacuation de la chaleur dégagée dans l'organe de connexion 50, il ne se produit pas d'échauffement trop important au niveau des contacts entre la première batterie 5 et la deuxième batterie 10. En outre, l'ensemble 1 est facile à manipuler.

En variante (non représentée), l'ensemble 1 comprend plus de deux équipements électriques. Certains de ces équipements électriques sont connectés entre eux par des systèmes analogues au système 15, afin de réaliser des circuits électriques analogues au circuit allant du câble 66 au câble 68.

Par exemple, trois batteries sont connectées entre elles en série à l'aide de deux systèmes analogues au système 15, ces systèmes étant situés respectivement entre la première et la deuxième batteries, et entre la deuxième et la troisième batteries.

## Revendications

1. Système (15) pour connecter électriquement au moins un premier équipement électrique (5) et un deuxième équipement électrique (10) entre eux, chacun du premier équipement électrique et du deuxième équipement électrique comportant au moins un premier connecteur (26, 26A) et un deuxième connecteur (28, 28A), lesdits connecteurs étant des connecteurs mâles ou femelles s'étendant selon une même direction de connexion (D) commune au premier équipement électrique (5) et au deuxième équipement électrique (10), la direction de connexion (D) étant destinée à être sensiblement verticale, le système (15) comprenant :
- au moins un organe de connexion (50) comportant un premier connecteur (52) femelle ou mâle et un deuxième connecteur (54) femelle ou mâle respectivement adaptés pour recevoir le premier connecteur (26A) mâle ou femelle du deuxième équipement électrique (10) et le deuxième connecteur (28) mâle ou femelle du premier équipement électrique (5) selon la direction de connexion (D), l'organe de connexion (50) comportant un pont (70) reliant électriquement le premier connecteur (52) femelle ou mâle et le deuxième connecteur (54) femelle ou mâle, le pont (70) étant propre à chauffer pendant une utilisation du système (15), et
- une coque (56) électriquement isolante définissant une chambre (100) recevant l'organe de connexion (50), la chambre (100) comportant une première partie (120) et une deuxième partie (122) situées de part et d'autre du pont (70) selon la direction de connexion (D), la chambre (100) et le pont (70) étant configurés pour permettre une circulation ascendante d'air (F3) de la première partie (120) vers la deuxième partie (122), la circulation ascendante d'air (F3) se faisant au contact du pont (70), et pour permettre une circulation descendante d'air (F4) de la deuxième partie (122) vers la première partie (120).

2. Système (15) selon la revendication 1, dans lequel la direction de connexion (D) est destinée à former avec la verticale un angle de moins de 45 degrés durant l'utilisation, de préférence inférieur à 5°.

3. Système (15) selon la revendication 1 ou 2, dans lequel le pont (70) définit au moins un conduit (92) adapté pour permettre une circulation descendante d'air dans le conduit de la deuxième partie (122) de la chambre (100) vers la première partie (120).

4. Système (15) selon l'une quelconque des revendications 1 à 3, dans lequel :
- le premier connecteur (52) et le deuxième connecteur (54) sont des connecteurs femelles,
- le premier connecteur (26A) du deuxième équipement électrique (10) et le deuxième connecteur (28) du premier équipement électrique (5) sont des connecteurs mâles, et
- le premier connecteur (52) et le deuxième connecteur (54) comprennent un corps de forme générale cylindrique et d'axe sensiblement parallèle à la direction de connexion (D) pour recevoir respectivement le premier connecteur (26A) du deuxième équipement électrique (10) et le deuxième connecteur (28) du premier équipement électrique (5).

5. Système (15) selon la revendication 4, dans lequel le premier connecteur (52) et le deuxième connecteur (54) sont adaptés pour permettre une circulation d'air dans le corps sensiblement selon la direction de connexion (D), le premier connecteur (52) et le deuxième connecteur (54) comprenant de préférence au moins un fil métallique (79) enroulé autour de la direction de connexion (D) et destiné à s'interposer entre le corps et respectivement le premier connecteur (26A) du deuxième équipement électrique (10) et le deuxième connecteur (28) du premier équipement électrique (5).

6. Système (15) selon la revendication 4 ou 5, dans lequel le premier connecteur (52) et le deuxième connecteur (54) comprennent une pluralité d'ailettes (80) faisant saillie à partir du corps.

7. Système (15) selon la revendication 6, dans lequel les ailettes (80) sont en contact avec une paroi de la chambre (100).

8. Système (15) selon la revendication 6 ou 7, dans lequel les ailettes (80) présentent une forme allongée selon la direction de connexion (D).

9. Système (15) selon l'une quelconque des revendications 1 à 8, dans lequel la chambre (100) comporte une troisième partie (124) et une quatrième partie (126) situées de part et d'autre du premier connecteur (52) selon la direction de connexion (D), la chambre (100), le premier connecteur (52) et le pont (70) étant configurés pour permettre une circulation ascendante d'air (F5) de la première partie (120) vers la quatrième partie (126) via la troisième partie (124), la circulation ascendante d'air (F5) se faisant au contact du premier connecteur (52), et pour permettre une circulation descendante d'air (F7) de la quatrième partie (126) vers la première partie (120).

10. Système (15) selon la revendication 9, dans lequel le pont (70) définit au moins un conduit (90) adapté pour permettre une circulation descendante d'air dans le conduit (90), de la quatrième partie (126) de la chambre (100) vers la première partie (120).

11. Système (15) selon l'une quelconque des revendications 1 à 10, comprenant :
- un troisième connecteur (58) femelle ou mâle et un quatrième connecteur (60) femelle ou mâle respectivement adaptés pour recevoir le deuxième connecteur (28A) du deuxième équipement électrique (10) et le premier connecteur (26) du premier équipement électrique (5) selon la direction de connexion (D), et
- deux coques d'isolation (62, 64) adaptées pour isoler électriquement respectivement le troisième connecteur (58) et le quatrième connecteur (60), les deux coques d'isolation (62, 64) étant respectivement reçues dans un premier logement (102) et un deuxième logement (104) définis par la coque (56) dans une position montée du troisième connecteur (58) et du quatrième connecteur (60).

12. Ensemble comprenant :
- au moins un premier équipement électrique (5) et un deuxième équipement électrique (10), chacun du premier équipement électrique (5) et du deuxième équipement électrique (10) comportant au moins un premier connecteur (26, 26A) et un deuxième connecteur (28, 28A), lesdits connecteurs étant des connecteurs mâles ou femelles s'étendant selon une même direction de connexion (D) commune au premier équipement électrique (5) et au deuxième équipement électrique (10), et
- un système (15) selon l'une quelconque des revendications précédentes, le système (15) connectant électriquement le premier équipement électrique (5) et le deuxième équipement électrique (10) entre eux, le premier connecteur (52) femelle ou mâle et le deuxième connecteur (54) femelle ou mâle recevant respectivement le premier connecteur (26A) mâle ou femelle du deuxième équipement électrique (10) et le deuxième connecteur (28) mâle ou femelle du premier équipement électrique (5) selon la direction de connexion (D).
